# EUROPÄISCHE PATENTSCHRIFT

(11) **EP 1 165 299 B1**
(45) Veröffentlichungstag und Bekanntmachung des Hinweises auf die Patenterteilung: **04.01.2006**
(21) Anmeldenummer: 00910733.5
(22) Anmeldetag: 29.02.2000
(51) Int. Cl.: B29C 33/58, B29C 37/00, B29C 33/56

(54) **VERFAHREN UND VORRICHTUNG ZUR AUFBRINGUNG VON OBERFLÄCHENMODIFIZIERENDEN HILFSSUBSTANZEN AUF DIE ARBEITSRAUMINNENFLÄCHEN VON WERKZEUGFORMEN**
METHOD AND DEVICE FOR APPLYING SURFACE-MODIFIED AUXILIARY SUBSTANCES TO THE INNER SURFACES OF THE WORKING AREA OF TOOL MOULDS
PROCEDE ET DISPOSITIF PERMETTANT D'APPLIQUER DES SUBSTANCES AUXILIAIRES DE MODIFICATION DE SURFACE SUR LA SURFACE INTERNE DE L'EMPREINTE D'UN MOULE

(30) Priorität: 04.03.1999 DE 19909477
(43) Veröffentlichungstag der Anmeldung: 02.01.2002
(73) Patentinhaber: Carl Freudenberg KG, 69469 Weinheim (DE)
(72) Erfinder: PESCHGES, Klaus-Jürgen, D-59514 Laudenbach (DE); KOSACK, Steffen, D-67454 Hassloch (DE); HARTMANN, Andreas, D-68169 MANNHEIM (DE); HOFMANN, Günter, D-68528 Ladenburg (DE)
(86) Internationale Anmeldenummer: PCT/EP2000/001693
(87) Internationale Veröffentlichungsnummer: WO 2000/051797

(56) Entgegenhaltungen:
- EP-A- 0 370 268
- EP-A- 0 445 614
- EP-A- 0 846 538
- WO-A-98/26913
- US-A- 4 534 928

## Beschreibung

Bei der Herstellung von geformten Produkten, insbesondere aus Gummi oder Kunststoffen ist die Reinheit und Beschaffenheit der Arbeitsrauminnenflächen der Werkzeugformen von großer Bedeutung. Sie beeinflussen die Formfüllung und vor allem die Verschmutzung des Werkzeugs. Um eine hohe Reinheit während des Herstellungsprozesses beizubehalten, können Maßnahmen bei der Erstellung des Werkzeugs und beim verwendeten Produktmaterial getroffen werden. Außerdem werden Hilfssubstanzen benutzt, die auf die Arbeitsrauminnenflächen der Werkzeugformen aufgebracht werden. So werden beispielsweise Trennmittel benutzt, die von Hand auf die Innenfläche des Werkzeugs unter Zuhilfenahme von Reinigungslappen, durch Aufsprühen oder dergleichen aufgebracht werden. Von Nachteil hierbei ist, daß die Hilfssubstanz ungleichmäßig über die Werkzeugoberfläche verteilt wird. Das Auftragen der Hilfssubstanz ist abhängig von der Bedienungsperson und nicht eindeutig reproduzierbar. Von Nachteil ist außerdem, daß der zeitliche Aufwand für das Aufbringen der Hilfssubstanz unvertretbar hoch ist.

### Stand der Technik

Durch die WO-A-98/26 913 ist ein Verfahren bekannt geworden, bei dem die Werkzeugform für das Aufbringen der Trennschicht aus der Verarbeitungsmaschine entnommen werden muß, um sodann die Trennschicht in mehreren einzelnen Verfahrensschritten aufbringen zu können. Das Verfahren ist äußerst aufwendig und zeitraubend. So wird bei der als Parylene-Verfahren bezeichneten Vorgehensweise ein Paraxylyl-Dampf mit einem Druck von 0,1 Torr auf die Werkzeugform gesprüht, wobei der Dampf an den Oberflächen kondensiert und polymerisiert.

In der EP 0 846 538 A2 werden Verfahren beschrieben, bei denen die Innenflächen des Werkzeugs mit fest daran fixierten Schichten aus metallischen Werkstoffen beschichtet werden. Diese Schichten werden einmal auf die Werkzeugform aufgetragen und haben Bestand währen der gesamten Standzeit der Werkzeugform.

Auch die EP 0 370 268 A2 beschreibt ein Verfahren zur Aufbringung einer Beschichtung auf ein Werkzeug durch Aufsprühen eines Trennmediums. Das Trennmedium enthält Lösungsmittel, die als "superkritisch" bezeichnet werden und die als Gas eine Dicke haben, die annähernd gleich zur Dichte der Flüssigkeit ist. Die Herstellung des Trennmediums und auch sein Einsatz sind aufwendig.

### Darstellung der Erfindung

Der Erfindung liegt die Aufgabe zugrunde hier Abhilfe zu schaffen und ein Verfahren zur Aufbringung von Hilfssubstanzen auf die Innenflächen von Werkzeugformen zu bilden, bei dem eine möglichst hohe Genauigkeit beim Aufbringen der Hilfssubstanz erreicht werden kann und das kostengünstig in kürzester Zeit durchführbar ist. Das Verfahren soll dazu beitragen, daß eine gute Formfüllung stattfindet und eine Verschmutzung der Form weitgehendst vermieden wird. Dadurch soll auch die Einsatzdauer des Werkzeugs erhöht werden.

Die Lösung der gestellten Aufgabe wird bei einem Verfahren zur Aufbringung von oberflächenmodifizierenden Hilfssubstanzen auf die Arbeitsrauminnenflächen von Werkzeugformen für die Erstellung von geformten Produkten, insbesondere aus Gummi oder Kunststoffen, bei dem die Hilfssubstanz gasförmig bzw. dampfförmig über eine natürliche und/oder eine erzwungene Strömung der Werkzeugform zugeführt und auf dem Arbeitsraum der Werkzeugform verteilt daran kondensiert wird erfindungsgemäß dadurch erreicht, dass die Werkzeugform in der Verarbeitungsmaschine integriert ist und die Hilfssubstanz portionsweise einem Depot entnommen wird, das mit dem Innenraum der Werkzeugform kommuniziert. Ein Einsprühen der Hilfssubstanz oder ihr Einbringen über Wischlappen oder dergleichen wird überflüssig. Die Gas- bzw. Dampfform der Hilfssubstanz wird bevorzugt im Vakuum erzeugt. Bereits durch einen leichten Unterdruck kann die dampförmige Hilfssubstanz erstellt und den Innenflächen der Werkzeugform zugeführt und daran kondensiert werden.

Zur schnellen und auch gleichmäßigen Verteilung der dampfförmigen Hilfssubstanz auf den Innenflächen der Werkzeugformen kann eine Luftströmung beitragen. Diese Strömung kann sowohl auf natürliche oder erzwungene Weise erzielt werden.

Eine effektive Möglichkeit den Kondensationsvorgang zu fördern besteht in einer Erhöhung des Drucks. Hierdurch kann eine gezielte Kondensation an den Werkzeugflächen erreicht beziehungsweise unterstützt werden.

Die einzusetzenden Hilfssubstanzen sind auf den einzelnen Anwendungsfall abzustimmen. Je nach Art des Werkzeugs, des zu formenden Produkts und insbesondere der dabei einzusetzenden Temperatur wird die Hilfssubstanz ausgewählt. Bevorzugt wird sie in einem beheizbaren Depot untergebracht, das mit der geöffneten Werkzeugform kommuniziert. Sie kann dann portionsweise dem Depot entnommen werden. Im Depot selbst kann die Hilfssubstanz in fester, flüssiger oder auch gasförmiger Form vorliegen. So kann in das Depot die Hilfssubstanz auch in einzelnen Portionen, beispielsweise in Tablettenform eingegeben werden.

In Abhängigkeit von dem herzustellenden Produkt wird die Hilfssubstanz so ausgewählt, daß sie an den Innenflächen der Werkzeugform in flüssiger und/oder fester Form angelagert wird. Für eine Anlagerung in fester Form, kann auch mit sublimierenden Substanzen gearbeitet werden.

Die Dicke der an den Innenflächen angelagerten Schicht ist vorbestimmbar. Sie kann beispielsweise durch die Dauer der Kondensationsphase gesteuert werden. Bei entsprechender Einstellung der einzelnen Verfahrensschritte können außergewöhnlich dünne Schichten erreicht werden.

Mit dem Verfahren ist es möglich vor jedem Formfüllgang eine definierte Schicht der Hilfssubstanz auf die Form aufzubringen. Möglich ist aber auch die Schicht in vorgegebenen Zyklen nach mehreren Formfüllvorgängen einzubringen. Dabei können schließlich bei den einzelnen Zyklen unterschiedliche Hilfssubstanzen eingesetzt werden. Letzteres ist sehr einfach möglich, indem in dem Depot die Hilfssubstanz ausgewechselt wird.

Die Vorrichtung zur Durchführung des Verfahrens besteht aus einer Vakuumanlage zur Erzeugung des Unterdrucks in der Werkzeugform und einem damit kommunizierenden Depot für die Hilfssubstanz. Eine sehr einfache Lösung ergibt sich dann, wenn die Vakuumanlage in die Formgebungsanlage integriert ist, wobei die Vakuumkammer die Werkzeugform luftdicht einschließt.

### Ausführung der Erfindung

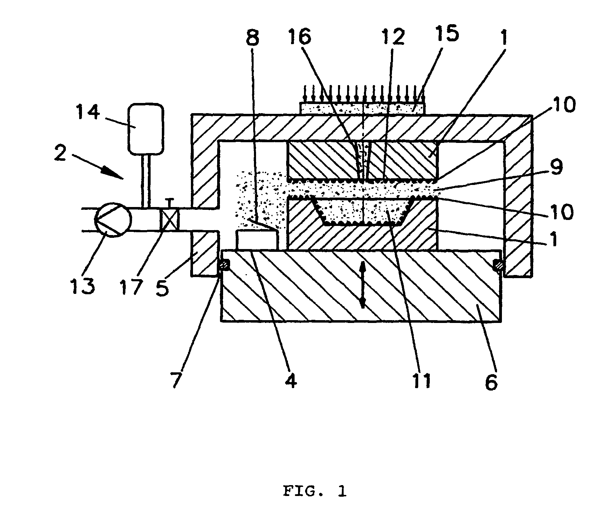

Anhand des in der Zeichnung dargestellten Ausführungsbeispiels wird die Erfindung näher erläutert.

Die Figur zeigt den prinzipiellen Aufbau einer Werkzeugform 1 mit einer Vakuumanlage 2 und einer Vakuumkammer 3, welche die Werkzeugform 1 umschließt. In der Vakuumkammer 3 ist auch das Depot 4 für die Hilfssubstanz untergebracht.

Die Vakuumkammer 3 besteht aus dem Zylinderteil 5 und dem verschiebbaren Kolben 6. Beide sind durch die Dichtungen 7 gegeneinander abgedichtet. Das Depot 4 hat den Verschluß 8, der für die Freigabe einer bestimmten Menge an verdampfter Hilfssubstanz geöffnet wird. Das Gas oder der Dampf mit der Hilfssubstanz breitet sich bei geöffnetem Werkzeug 1 und geöffnetem Depot 4 in der Vakuumkammer 3 aus, wie durch die eingezeichneten Punkte angedeutet. Die auf der Werkzeuginnenfläche 11, 12 eingezeichneten, größeren Punkte 10 bezeichnen die angelagerte Schicht an den Werkzeuginnenflächen 11 und 12.

Die Vakuumanlage 2 besteht aus der Vakuumpumpe 13 und dem Puffer 14.

Mit 15 ist symbolhaft das in das Werkzeug 1 einzuspritzende Produktmaterial bezeichnet. Bei geschlossenem Werkzeug 1 wird das Produktmaterial 15 durch die Düse 16 in den Innenraum des Werkzeugs 1 eingespritzt.

Die einzelnen Verfahrensschritte erfolgen folgendermaßen:
Nachdem das Material 15 in die geschlossene Werkzeugform 1 eingespritzt ist, wir die Werkzeugform 1 geöffnet und das fertige Produkt entnommen. Das Ventil 17 zur Vakuumanlage 2 wird geöffnet und innerhalb der Vakuumkammer 3 ein Unterdruck erzeugt. Dieser Unterdruck ist auf die im Depot 4 befindliche Hilfssubstanz abgestimmt. Der Unterdruck bewirkt, daß nach Öffnen des Depotverschlusses 8 eine vorgegebene Menge der Hilfssubstanz in Gas- oder Dampfform aus dem Depot 4 austritt. Dieser Dampf 9 schlägt sich an den Innenflächen 11 und 12 der Werkzeugform 1 nieder. Dieses kann durch eine Kühlung der Werkzeugflächen 11 und 12 unterstützt werden. Möglich ist auch den Druck in der Vakuumkammer 3 so zu steuern, daß eine Kondensation des eingeströmten Dampfes an den Flächen 11 und 12 erfolgt. Durch entsprechende Steuerung von Unterdruck in der Kammer 3, Öffnungszeit des Depots 4 und Kühlung der Innenflächen 11 und 12 kann eine definierte, vorgegebene Schicht 10 erzielt werden. Danach wird das Werkzeug 1 geschlossen und der nächste Spritzvorgang kann stattfinden.

## Patentansprüche

1. Verfahren zur Aufbringung von oberflächenmodifizierenden Hilfssubstanzen auf die Arbeitsrauminnenflächen von Werkzeugformen für die Herstellung von geformten Produkten, insbesondere aus Gummi oder Kunststoffen, bei dem die Hilfssubstanz gasförmig bzw. dampfförmig über eine natürliche und/oder eine erzwungene Strömung der Werkzeugform zugeführt und auf den Arbeitsrauminnenflächen der Werkzeugform verteilt daran kondensiert wird, **dadurch gekennzeichnet, dass** die Werkzeugform (1) in der Verarbeitungsmaschine integriert ist und die Hilfssubstanz portionsweise einem Depot (4) entnommen wird, das mit dem Innenraum der Werkzeugform (1) kommuniziert.

2. Verfahren nach Anspruch 1, **dadurch gekennzeichnet, dass** die Gas- bzw. Dampfform der Hilfssubstanz im Vakuum erzeugt wird.

3. Verfahren nach einem der Ansprüche 1 oder 2, **dadurch gekennzeichnet, dass** zur Beschleunigung des Kondensationsvorganges eine Erhöhung des Drucks vorgenommen wird.

4. Verfahren nach einem der Ansprüche 1 bis 3, **dadurch gekennzeichnet, dass** die Hilfssubstanz dem Depot (4) in einzelnen Portionen, in Tablettenform oder dergleichen zugegeben wird.

5. Verfahren nach einem der Ansprüche 1 bis 4, **dadurch gekennzeichnet, dass** die Dicke der an den Innenflächen (11, 12) angelagerten Schicht (10) durch die Dauer der Kondensationsphase gesteuert wird.

6. Verfahren nach einem der Ansprüche 1 bis 5, **dadurch gekennzeichnet, dass** die Schicht (10) in vorgegebenen Zyklen, vor dem ersten Zyklus und daran anschließend nach einem oder mehreren Formfüllvorgängen angelagert wird.

7. Verfahren nach einem der Ansprüche 1 bis 6, **dadurch gekennzeichnet, dass** einzelne Zyklen mit unterschiedlichen Hilfssubstanzen durchgeführt werden.

8. Verfahren nach einem der Ansprüche 1 bis 7, **dadurch gekennzeichnet, dass** zur Erzeugung der Strömung der Hilfssubstanz im Innenraum der Werkzeugform (1) ein Druck vorhanden ist, der niedriger als der Druck im Depot ist.

9. Vorrichtung zur Durchführung des Verfahrens nach einem der Ansprüche 1 bis 8, **dadurch gekennzeichnet, dass** eine Vakuumanlage (2) zur Erzeugung eines Unterdrucks in der in der Verarbeitungsmaschine integrierten Werkzeugform (1) und in einem damit kommunizierenden Depot (4) für die Hilfssubstanz dient, wobei die Vakuumanlage (2) ebenfalls in die Formgebungsanlage integriert ist.

10. Vorrichtung nach Anspruch 9, **dadurch gekennzeichnet, dass** die Vakuumkammer (3) die Werkzeugform (1) luftdicht einschließt.

## Claims

1. Method for applying surface-modified auxiliary substances to the inner surfaces of the working area of tool moulds for the production of moulded products, in particular of rubber or plastic, in which method the auxiliary substance is fed to the tool mould in a gas or vapour form via a natural and/or forced flow and condenses on the inner surfaces of the working area of the tool mould in a distributed manner thereon, **characterized in that** the tool mould (1) is integrated in the processing machine and the auxiliary substance is extracted in portions from a repository (4) which communicates with the interior of the tool mould (1).

2. Method according to Claim 1, **characterized in that** the gas or vapour form of the auxiliary substance is produced in vacuum.

3. Method according to either of Claims 1 and 2, **characterized in that** the pressure is increased in order to accelerate the condensation process.

4. Method according to one of Claims 1 to 3, **characterized in that** the auxiliary substance is added to the repository (4) in individual portions, in pellet form or the like.

5. Method according to one of Claims 1 to 4, **characterized in that** the thickness of the coating (10) deposited on the inner surfaces (11, 12) is controlled by the duration of the condensation phase.

6. Method according to one of Claims 1 to 5, **characterized in that** the coating (10) is deposited in predetermined cycles, before the first cycle and after that after one or more mould filling operations.

7. Method according to one of Claims 1 to 6, **characterized in that** individual cycles are carried out with different auxiliary substances.

8. Method according to one of Claims 1 to 7, **characterized in that** a pressure which is lower than the pressure in the repository is present in the interior of the tool mould (1) in order to generate the flow of the auxiliary substance.

9. Device for carrying out the method according to one of Claims 1 to 8, **characterized in that** a vacuum unit (2) serves to generate a vacuum in the tool mould (1), integrated in the processing machine, and in a repository (4) communicating with said tool mould (1) and intended for the auxiliary substance, the vacuum unit (2) likewise being integrated in the shaping unit.

10. Device according to Claim 9, **characterized in that** the vacuum chamber (3) encloses the tool mould (1) in an airtight manner.

## Revendications

1. Procédé pour appliquer des substances auxiliaires de modification de surface sur les surfaces internes d'un moule pour la fabrication de produits moulés, en particulier en caoutchouc ou en matières plastiques, dans lequel la substance auxiliaire est introduite dans le moule sous forme de gaz ou selon le cas de vapeur au moyen d'un écoulement naturel et/ou forcé et est condensée sur les surfaces internes du moule en étant répartie sur celles-ci, **caractérisé en ce que** le moule (1) est intégré dans la machine de formage et la substance auxiliaire est prélevée par portions dans un dépôt (4), qui communique avec la cavité intérieure du moule (1).

2. Procédé selon la revendication 1, **caractérisé en ce que** la forme de gaz ou selon le cas de vapeur de la substance auxiliaire est produite sous vide.

3. Procédé selon l'une quelconque des revendications 1 ou 2, **caractérisé en ce que** l'on opère une augmentation de la pression pour accélérer le processus de condensation.

4. Procédé selon l'une quelconque des revendications 1 à 3, **caractérisé en ce que** la substance auxiliaire est fournie au dépôt (4) en portions individuelles, sous forme de tablettes ou analogue.

5. Procédé selon l'une quelconque des revendications 1 à 4, **caractérisé en ce que** l'épaisseur de la couche (10) déposée sur les surfaces internes (11, 12) est réglée par la durée de la phase de condensation.

6. Procédé selon l'une quelconque des revendications 1 à 5, **caractérisé en ce que** la couche (10) est déposée en cycles prédéterminés, avant le premier cycle et ensuite après une ou plusieurs opérations de remplissage du moule.

7. Procédé selon l'une quelconque des revendications 1 à 6, **caractérisé en ce que** des cycles individuels sont exécutés avec des substances auxiliaires différentes.

8. Procédé selon l'une quelconque des revendications 1 à 7, **caractérisé en ce qu'**il règne dans la cavité du moule (1), pour produire l'écoulement de la substance auxiliaire, une pression inférieure à la pression dans le dépôt.

9. Dispositif pour la mise en oeuvre du procédé selon l'une quelconque des revendications 1 à 8, **caractérisé en ce qu'**une installation sous vide (2) sert pour la production d'une dépression dans le moule (1) intégré dans la machine de formage et dans un dépôt (4) pour la substance auxiliaire communiquant avec celui-ci, dans lequel l'installation sous vide (2) est également intégrée dans l'installation de formage.

10. Dispositif selon la revendication 9, **caractérisé en ce que** la chambre sous vide (3) entoure hermétiquement le moule (1).
